# EUROPÄISCHE PATENTSCHRIFT

(11) **EP 0 860 634 B1**
(45) Veröffentlichungstag und Bekanntmachung des Hinweises auf die Patenterteilung: **17.05.2006**
(21) Anmeldenummer: 97122011.6
(22) Anmeldetag: 13.12.1997
(51) Int. Cl.: F16J 3/04, B23Q 11/08

(54) **Element zum Koppeln zweier Faltenbälge**
Element coupling two bellows
Elément pour accoupler deux soufflets

(30) Priorität: 24.02.1997 DE 29703229 U
(43) Veröffentlichungstag der Anmeldung: 26.08.1998
(73) Patentinhaber: Arno Arnold GmbH, D-63179 Obertshausen (DE)
(72) Erfinder: Mang, Wolf Matthias, Dipl. Kfm., 63179 Obertshausen (DE)
(74) Vertreter: Böck, Bernhard

(56) Entgegenhaltungen:
- EP-A- 0 433 534
- DE-A- 4 435 824
- DE-A- 4 436 944
- JP-A- 7 204 878
- PATENT ABSTRACTS OF JAPAN vol. 008, no. 166 (M-314), 2.August 1984 & JP 59 061585 A (TOSHIBA KK), 7.April 1984,

## Beschreibung

Die Erfindung betrifft ein Koppelelement für die Verbindung eines ersten Faltenbalges mit einem zu diesem sich im wesentlichen achsparallel erstreckenden und axial längsbewegbaren zweiten Faltenbalg.

Es kommt häufig vor, daß zu einem in dieser Weise angetriebenen Maschinenelement, beispielsweise einem auf einer Führungsbahn geradlinig bewegten Support oder dergleichen, noch - in Parallelführung - ein Faltenbalg bewegt werden muß. Ein typisches Beispiel für eine solche Anordnung stellt eine Laser-Schneidmaschine dar, bei der auf einer solchen Führungsbahn ein Laser-Schneidkopf längsbewegt wird. Die Führungsbahn ist dabei in der Regel in geeigneter Weise durch eine mitgeführte Abdeckung staubgeschützt. Parallel zu der Führung des Laser-Schneidkopfes kann nun ein Faltenbalg vorgesehen sein, durch den der Laser mittels eines Spiegelsystems hindurchgeschickt wird, wobei er selbstverständlich auf keinerlei Hindernis zwischen Sender und Empfänger treffen darf. Der Faltenbalg muß dementsprechend in ganzer Länge von der Führung stets konstant beabstandet sein und darf nirgends durchhängen.

Besonders schwierig gestaltet sich die Zwangsführung des Faltenbalges, wenn die Führung selbst von einem Faltenbalg überfangen wird. Es fehlen dann geeignete ruhende Stützstellen für den von diesem ersten parallel beabstandeten zweiten Faltenbalg, so daß nicht gewährleistet ist, daß der von dem Laserstrahl durchsetzte zweite Faltenbalg ohne wesentliche Abweichungen entlang der optischen Achse bewegt wird.

Ferner ist aus der DE 44 35 824 A1 ein Faltenbalg bekannt, der abgewinkelte Metalllamellen aufweist, die jeweils einen in Auszugsrichtung wirkenden Hauptschenkel und einen rechtwinklig zu diesem angeordneten weiteren Schenkel haben. Der weitere Schenkel hat mindestens einen Klemmbereich, so dass die jeweilige Metalllamelle im Bereich einer äußeren Faltkante des Faltenbalgs fixiert werden kann.

Die Erfindung hat sich deshalb die Aufgabe gestellt, diese Mängel abzustellen und ein Koppelelement der eingangs näher erläuterten Art so auszubilden, daß der parallel zu der linear angetriebenen Abdeckung der Führung bewegte Faltenbalg stets und möglichst in ganzer jeweiliger Länge konstant von der Abdeckung beabstandet ist, so daß eine durch den Faltenbalg geführte Strahlung, beispielsweise ein Laser-Strahl, unabhängig vom Auszug des Faltenbalges diesen unbehindert passieren kann, wobei der Faltenbalg gleichwohl möglichst leicht ausgebildet sein soll.

Erfindungsgemäß wird die Aufgabe durch ein Koppelelement mit den Merkmalen des Patentanspruchs 1 gelöst.

Eine solche Anordnung ist sehr flexibel; je nach der Länge und Ausführung des zweiten, abgestützten Faltenbalges können die Anzahl der Koppelelemente und deren Abstände voneinander so variiert werden, daß der zweite Faltenbalg sowohl in Abhängigkeit von der Bewegung des ersten angetrieben wird als auch so abgestützt ist, daß er sich zu diesem parallel bewegt und durchhängende Partien so kurz bleiben, daß beispielsweise ein durch ihn hindurchgeführter Laser-Strahl nicht auf eine Lamelle des Faltenbalges treffen und damit unterbrochen werden kann. Trotzdem kann der zweite Faltenbalg sehr leicht ausgebildet sein.

Ganz besonders vorteilhaft ist es, wenn die Haltetaschen längsrechteckig ausgebildet und in ihrer Längsausdehnung über die Faltkanten aufschiebbar sind. Weisen die Faltenbälge einen rechteckigen Querschnitt auf und werden jeweils zwei im Querschnitt gegenüberliegende äußere Faltkanten einer Lamelle von zwei parallelen Haltetaschen überfangen, dann ist die Anordnung bereits lagestabilisiert. In einer sehr sicheren Ausbildung der Koppelung können an dem Korpus zwei um 90° versetzte Paare jeweils zueinander parallel ausgerichteter Haltetaschen ausgebildet sein, so daß hierdurch bereits ohne zusätzliche Halteelemente eine recht sichere räumliche Zuordnung beider Faltenbälge und eine Arretierung der Koppelelemente an ihnen erfolgt.

Das Koppelelement ist sehr einfach herstellbar, wenn die Haltetaschen durch Abfaltung aus dem Korpus des Koppelelementes gebildet sind, so daß dieser als reines Stanzteil ausgeführt werden kann.

Die räumliche Zuordnung des Koppelelementes zu beiden Faltenbälgen kann endgültig sichergestellt werden, wenn es an mindestens einem der Faltenbälge dann arretierbar ist, wenn eine von dessen äußeren Faltkanten von einer zugehörigen Haltetasche des Koppelelementes übergriffen wird. In einfacher Weise kann das beispielsweise dadurch geschehen, daß das Koppelelement durch mindestens eine Klettverbindung mit einem Faltenbalg verbindbar ist; besonders sicher ist die Arretierung, wenn zwischen dem Koppelelement und jedem der Faltenbälge mindestens eine Klettverbindung vorgesehen ist. Solange diese Klettverbindungen nicht gelöst werden, kann demzufolge das Koppelelement nicht aus dem Verbund mit den Faltenbälgen ausscheiden: die Koppelung ist damit außerordentlich stabil, selbst bei hoher dynamischer Beanspruchung.

Am besten ist es dabei, wenn eine solche Klettverbindung aus je einem Klettband an den beiden miteinander zu verbindenden Bauteilen besteht. Ein erstes Klettband kann besonders günstig an dem Korpus zwischen zwei parallel benachbarten Haltetaschen auf einer Haltelasche befestigt sein, die zwischen diesen Haltetaschen und zu ihnen im rechten Winkel verlaufend ausgebildet ist.

Hingegen ist es zweckmäßig, wenn ein mit dem ersten zur Ausbildung einer Klettverbindung geeignetes zweites Klettband auf einer Lamelle des jeweiligen Faltenbalges befestigt ist, die sich, um 90° abgewinkelt, zwischen denjenigen äußeren Faltkanten des Faltenbalges erstreckt, die von den zugehörigen Haltetaschen überfangen werden.

Schließlich gestattet die Anordnung eine wirtschaftliche Herstellung des Koppelelementes aus dem erwähnten Stanzteil, wenn sein Korpus als ebenes Blech ausgebildet ist, an dem die Haltetaschen jeweils um 180° abgefaltet sind, wobei der Abstand zwischen dem Korpus und der einzelnen Haltetasche gleich oder größer ist als die Dicke einer eine äußere Faltkante ausbildenden (Doppel-) Lamelle des Faltenbalges, so daß die Haltetaschen je nach Erfordernis mit mehr oder weniger Spiel die Faltkanten übergreifen.

Durch die Erfindung ist ein sehr flaches Bauelement herstellbar, das bequem zwischen zwei parallel geführten Faltenbälgen vorgesehen werden kann, diese so miteinander verbindend, daß der zweite Faltenbalg in Abhängigkeit von der Bewegung des ersten in der gleichen Teilung der Lamellen zwangsgeführt ist und dabei trotz extrem leichter Bauweise eine hohe Lagestabilität besitzt als Voraussetzung für eine gleichbleibend einwandfreie Funktion. Die Koppelelemente, deren Anzahl beliebig ist und so gewählt werden kann, daß diese hohe Lagestabilität sichergestellt ist, sind leicht montier- und wieder abbaubar, selbst wenn ihre Lage zusätzlich, beispielsweise durch Klettverbindungen, gesichert wird. Ihre Verwendung fordert keinerlei spezielle Fertigkeiten und ist genauso wirtschaftlich wie ihre Herstellung aus einem einfachen Metallblech.

Die Erfindung wird nachstehend anhand der Zeichnung an einem Ausführungsbeispiel näher erläutert. Es zeigen:
- Fig. 1: ein erfindungsgemäßes Koppelelement mit zwei mit ihm verbundenen Faltenbälgen in einer Sprengdarstellung,
- Fig. 2: die mit dem Koppelelement der Fig. 1 hergestellte Koppelung der Faltenbälge, beide in räumlicher Darstellung,
- Fig. 3: ein Abwicklung des Koppelelementes aus Fig. 1,2 und
- Fig. 4 und 5: ein erfindungsgemäßes, aus einem Zuschnitt entsprechend Fig. 3 angefertigtes Koppelelement in Vorder- und Seitenansicht,
sämtlich in schematisch vereinfachter Darstellung.

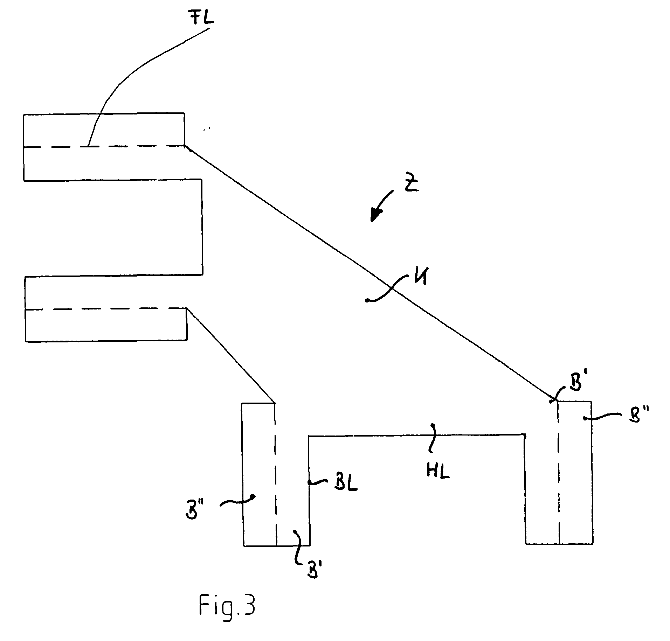

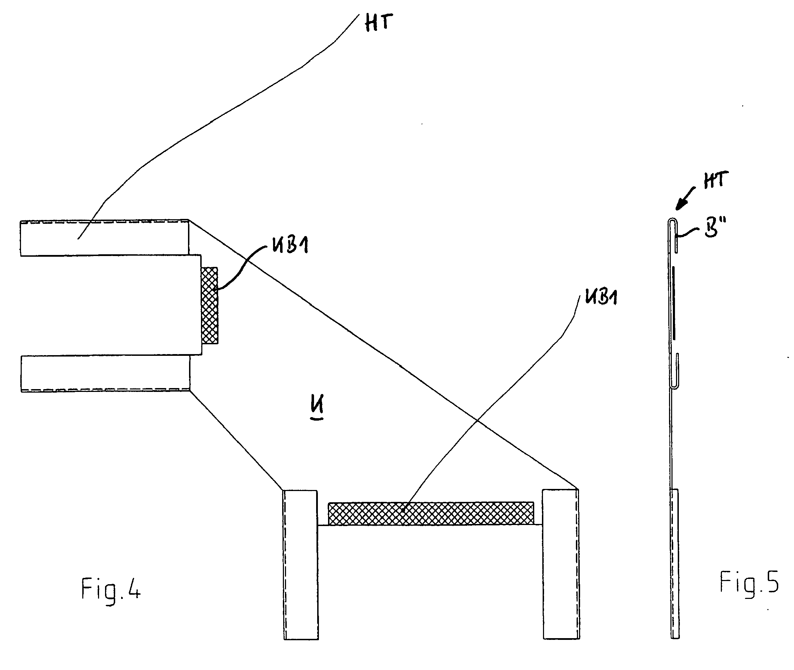

Ein Koppelelement E nach der Erfindung entsteht aus einem ebenen Zuschnitt Z entsprechend Fig. 3. Der Zuschnitt Z hat überall die gleiche Blechdicke und kann deshalb in einfacher Weise als Stanzteil hergestellt werden. Ein Korpus K ist von angestückten, rechteckigen Blechlaschen BL dergestalt umgeben, daß deren Längsrichtung von dem Korpus K wegweist und jeweils zwei Blechlaschen BL einander parallel sind, wobei die Blechlaschen BL paarweise um 90° gegeneinander versetzt an den Korpus K angestückt sind. Eine die jeweilige Blechlasche BL in ihrer Längsrichtung halbierende, in der Fig. 3 angedeutete Faltlinie FL veranschaulicht, daß jeweils eine Hälfte B' jeder Blechlasche BL mit dem Korpus K unverändert in einer Ebene verbleibt, während eine zweite Hälfte B" um 180° an der Faltlinie FL abgefaltet wird, so daß aus den Hälften B' und B" Haltetaschen HT entstehen, wie sie in den Fig. 4, 5 komplett ausgeführt angegeben sind. Die Haltetaschen HT fallen relativ schmal aus.

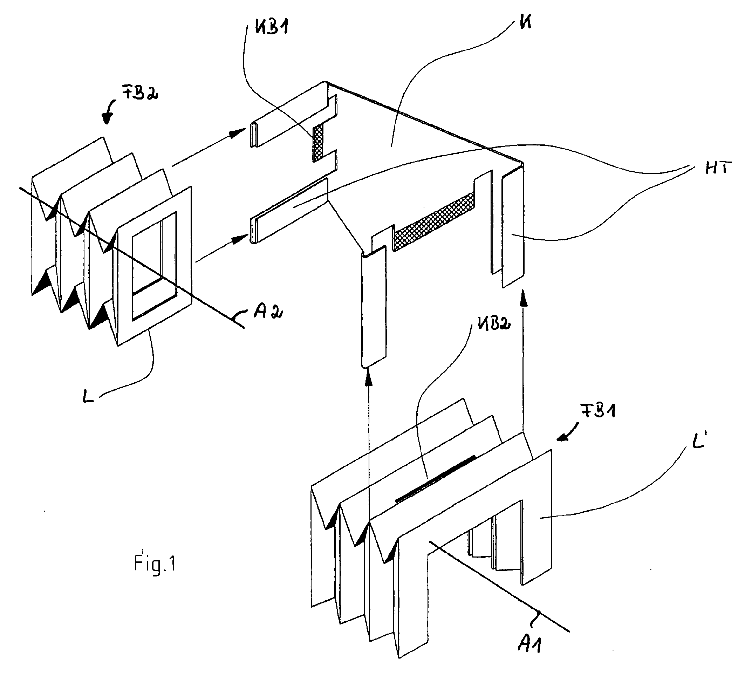

In den Fig. 3, 4 sind Haltelaschen HL zu erkennen, die in einfacher Weise von einem an dem Korpus K vorhandenen Verbindungssteg zwischen je einem Paar Haltetaschen HT gebildet werden und (Fig. 1, 4) mit jeweils einem ersten Klettband KB1 belegt sind. Die Klettbänder KB1 können unterschiedlich dimensioniert sein, wie die Fig. 1, 4 ebenfalls zeigen.

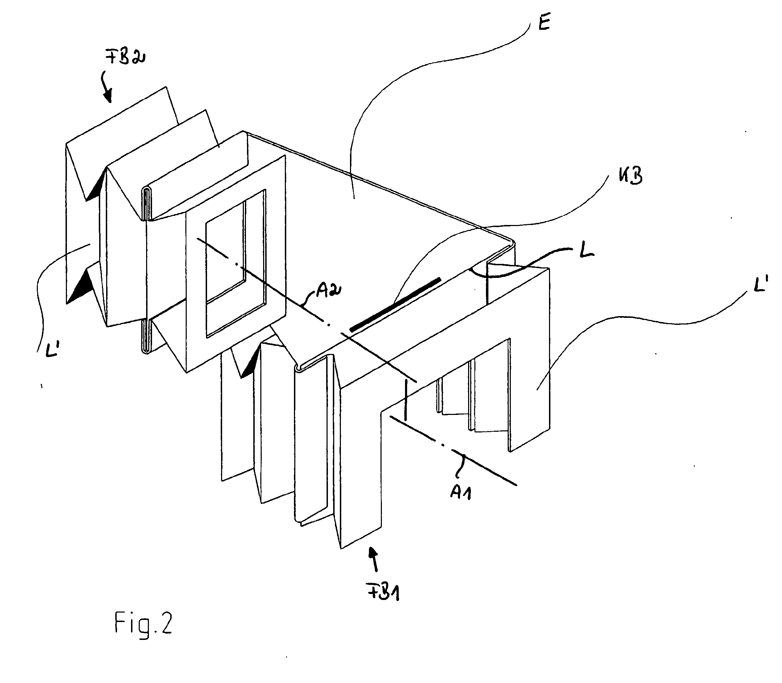

In den Fig. 1, 2 ist die Verbindung des Koppelelementes E mit zwei achsparallel angeordneten und mit einem Abstand ihrer Achsen A1 und A2 voneinander entfernten Faltenbälgen FB1,FB2 gezeigt, von denen der erste Faltenbalg FB1 beispielsweise als Staubschutz auf einer geradlinigen Führung für ein Werkzeug oder dergleichen dient und mit diesem in Richtung der Führung angetrieben wird; er liegt dabei auf der hier nicht dargestellten Führung auf und bedarf keiner weiteren Abstützung. Im Gegensatz dazu ist der zweite Faltenbalg FB2 freihängend angeordnet und muß mehrmals abgestützt und geführt werden, wenn er eine gewisse Lagestabilität - auch nach vollständigem Auszug - beibehalten soll. Dazu dienen Koppelelemente E, von denen in Fig. 1, 2 eines dargestellt ist.

Die an dem Korpus K des Koppelelementes E paarweise um 90° versetzt angeordneten Haltetaschen HT werden zu diesem Zweck über jeweils eine der geradlinigen äußeren Faltkanten FK1 bzw. FK2 geschoben, die notwendigerweise an jedem im Querschnitt rechteckigen Faltenbalg ausgebildet sind. Dadurch, daß die ebenfalls rechteckigen Haltetaschen HT in ihrer Längsrichtung paarweise winkelversetzt sind, ist eine recht sichere Halterung des Koppelelementes E bereits nach seinem Aufbringen auf die Faltenbälge FB1,FB2 sichergestellt. Es zeigt sich, daß es günstig ist, wenn die Haltetaschen HT relativ schmal ausfallen, so daß die freie Bewegung der überfangenen Lamellen L' nicht unnötig eingeschränkt ist.

Die Koppelverbindung der Faltenbälge FB1,FB2 wird durch Klettverbindungen KB zwischen dem Koppelelement E und jedem einzelnen der Faltenbälge FB1,FB2 zusätzlich gesichert. Dazu sind außer den bereits an dem Koppelelement E befindlichen ersten Klettbändern KB1 weiterhin zweite Klettbänder KB2 an den Faltenbälgen FB1,FB2 vorgesehen, von denen ein Klettband KB2 an dem Faltenbalg FB1 in Fig. 1, 2 gezeigt ist. Es wird in einfacher Weise auf einer Lamelle L des Faltenbalges FB1 befestigt, beispielsweise geklebt, die zwischen den dazu um 90°versetzten, von den Haltetaschen HT überfangenen Lamellen L' befindlich ist. Auf diese Weise ist es erst nach Lösung der Klettverbindungen KB in Fig. 2 möglich, das zugehörige Koppelelement E von den Faltenbälgen FB1,FB2 abzuziehen, wenn die Koppelung gelöst werden soll.

### Bezugszeichen

- A1,A2: Achse
- BL: Blechlasche
- B',B": Hälfte
- E: Koppelelement
- FB1: (erster) Faltenbalg
- FB2: (zweiter) Faltenbalg
- FK1,FK2: (äußere) Faltkante
- FL: Faltlinie
- HT: Haltetasche
- HL: Haltelasche
- K: Korpus
- KB: Klettverbindung
- KB1: (erstes) Klettband
- KB2: (zweites) Klettband
- L,L': Lamelle
- Z: Zuschnitt

## Patentansprüche

1. Koppelelement zur Verbindung eines ersten Faltenbalges (FB2) mit einem sich zu diesem achsparallel erstreckenden und axial längsbewegbaren zweiten Faltenbalg (FB1), wobei beide Faltenbälge (FB2, FB1) im Querschnitt an ihren Lamellen (L, L') jeweils geradlinige äußere Faltkanten (FK2, FK1) aufweisen, wobei das Koppelelement (E) als starres Bauelement ausgebildet ist und mehrere flache Haltetaschen (HT) aufweist, von denen mindestens eine Haltetasche über eine äußere Faltkante (FK2) eines ersten Faltenbalges (FB2) und mindestens eine weitere Haltetasche über eine äußere Faltkante (FK1) eines zweiten Faltenbalges (FB1) die jeweiligen Faltkanten (FK2, FK1) übergreifend schiebbar ist.

2. Koppelelement nach Anspruch 1, **dadurch gekennzeichnet, daß** die Haltetaschen (HT) längsrechteckig ausgebildet und in ihrer Längsausdehnung über die Faltkanten (FK1,FK2) aufschiebbar sind.

3. Koppelelement nach Anspruch 1 oder 2, **dadurch gekennzeichnet, daß** die Faltenbälge (FB1,FB2) einen rechteckigen Querschnitt aufweisen und jeweils zwei im Querschnitt gegenüberliegende äußere Faltkanten (FK1,FK2) einer Lamelle (L') von zwei parallelen Haltetaschen (HT) überfangen werden.

4. Koppelelement nach einem der Ansprüche 1 bis 3, **dadurch gekennzeichnet, daß** an einem Korpus (K) zwei um 90° versetzte Paare jeweils zueinander parallel ausgerichteter Haltetaschen (HT) ausgebildet sind.

5. Koppelelement nach einem der Ansprüche 1 bis 4, **dadurch gekennzeichnet, daß** die Haltetaschen (HT) durch Abfaltung aus einem Korpus (K) des Koppelelementes (E) gebildet sind.

6. Koppelelement nach einem der Ansprüche 1 bis 5, **dadurch gekennzeichnet, daß** es an mindestens einem der Faltenbälge (FB1,FB2) arretierbar ist, wenn eine von dessen äußeren Faltkanten (FK1,FK2) von einer zugehörigen Haltetasche (HT) des Koppelelementes (E) übergriffen wird.

7. Koppelelement nach einem der Ansprüche 1 bis 6, **dadurch gekennzeichnet, daß** es durch mindestens eine Klettverbindung (KB) mit einem Faltenbalg (FB1,FB2) verbindbar ist.

8. Koppelelement nach einem der Ansprüche 2 bis 7, **dadurch gekennzeichnet, daß** zwischen dem Koppelelement (E) und jedem der Faltenbälge (FB1,FB2) mindestens eine Klettverbindung (KB) vorgesehen ist.

9. Koppelelement nach einem der Ansprüche 7 oder 8, **dadurch gekennzeichnet, daß** die Klettverbindung (KB) aus je einem Klettband (KB1,KB2) an den beiden miteinander zu verbindenden Bauteilen besteht.

10. Koppelelement nach Anspruch 9, **dadurch gekennzeichnet, daß** an dem Korpus (K) zwischen zwei parallel benachbarten Haltetaschen (HT) eine zwischen diesen Haltetaschen (HT) und zu ihnen im rechten Winkel verlaufende Haltelasche (HL) ausgebildet ist, auf der ein erstes Klettband (KB1) befestigt ist.

11. Koppelelement nach Anspruch 9 und 10, **dadurch gekennzeichnet, daß** ein mit dem ersten (KB1) zur Ausbildung einer Klettverbindung (KB) geeignetes zweites Klettband (KB2) auf einer Lamelle (L) des jeweiligen Faltenbalges (FB1,FB2) befestigt ist, die sich, um 90° abgewinkelt, zwischen denjenigen äußeren Faltkanten (FK1,FK2) des Faltenbalges (FB1,FB2) erstreckt, die von den zugehörigen Haltetaschen (HT) überfangen werden.

12. Koppelelement nach einem der Ansprüche 1 bis 11, **dadurch gekennzeichnet, daß** sein Korpus (K) als ebenes Blech ausgebildet ist, an dem die Haltetaschen (HT) jeweils um 180° abgefaltet sind, wobei der Abstand zwischen dem Korpus (K) und der einzelnen Haltetasche (HT) gleich oder größer ist als die Dicke einer eine äußere Faltkante (FK1,FK2) ausbildenden (Doppel-) Lamelle (L') des Faltenbalges (FB1,FB2).

## Claims

1. A coupling element for connecting a first bellows (FB2) to a second bellows (FB1) extending axially parallel thereto and which may be moved axially in the longitudinal direction, the two respective bellows (FB2, FB1) having in cross-section straight outer fold edges (FK2, FK1) at their lamellar plates (L, L'), the coupling element (E) being configured as a rigid component and comprising a plurality of flat holding pockets (HT), of which at least one holding pocket is slidable over an outer fold edge (FK2) of a first bellows (FB2) and at least one further holding pocket is slidable over an outer fold edge (FK1) of a second bellows (FB1), engaging the respective fold edges (FK2, FK1).

2. The coupling element according to claim 1, **characterised in that** the holding pockets (HT) are of longitudinal rectangular configuration and, in their longitudinal extension, are slidable over the fold edges (FK1, FK2).

3. The coupling element according to claim 1 or 2, **characterised in that** the bellows (FB1, FB2) have a rectangular cross-section and two respective outer fold edges (FK1, FK2) of a lamellar plate (L'), opposing one another in cross-section, are engaged by two parallel holding pockets (HT).

4. The coupling element according to any one of claims 1 to 3, **characterised in that** two respective pairs of holding pockets (HT) aligned parallel to one another and offset by 90° are configured on a body (K).

5. The coupling element according to any one of claims 1 to 4, **characterised in that** the holding pockets (HT) are formed by folding down from a body (K) of the coupling element (E).

6. The coupling element according to any one of claims 1 to 5, **characterised in that** it may be locked in place on at least one of the bellows (FB1, FB2) when one of its outer fold edges (FK1, FK2) is engaged by a corresponding holding pocket (HT) of the coupling element (E).

7. The coupling element according to any one of claims 1 to 6, **characterised in that** it may be connected to a bellows (FB1, FB2) by at least one velcro connection (KB) .

8. The coupling element according to any one of claims 2 to 7, **characterised in that** at least one velcro connection (KB) is provided between the coupling element (E) and each of the bellows (FB1, FB2).

9. The coupling element according to either claim 7 or 8, **characterised in that** the velcro connection (KB) consists of one respective velcro strip (KB1, KB2) on the two components to be connected to one another.

10. The coupling element according to claim 9, **characterised in that** between two parallel adjacent holding pockets (HT) a retaining plate (HL), extending between these holding pockets (HT) and at right angles thereto, is formed on the body (K) and to which a first velcro strip (KB1) is attached.

11. The coupling element according to claims 9 and 10, **characterised in that** a second velcro strip (KB2) suitable for forming a velcro connection (KB) with the first velcro strip (KB1) is attached to a lamellar plate (L) of the respective bellows (FB1, FB2) and which lamellar plate, offset by 90°, extends between those outer fold edges (FK1, FK2) of the bellows (FB1, FB2) which are engaged by the corresponding holding pockets (HT).

12. The coupling element according to any one of claims 1 to 11, **characterised in that** its body (K) is configured as a flat metal plate, on which the respective holding pockets (HT) are folded down by 180°, the distance between the body (K) and the individual holding pocket (HT) being the same or greater than the thickness of a (double) lamellar plate (L') of the bellows (FB1, FB2) forming an outer fold edge (FK1, FK2).

## Revendications

1. Elément de couplage pour la liaison d'un premier soufflet (FB2) avec un deuxième soufflet (FB1) s'étendant à la parallèle de l'axe de ce dernier et mobile en longueur en direction axiale, les deux soufflets (FB2, FB1) comportant en section transversale sur leurs lamelles (L, L') chacun des arêtes de pliage extérieures rectilignes (FK2, FK1), l'élément de couplage (E) étant conçu sous la forme d'un élément rigide et comportant plusieurs poches de retenue (HT), dont au moins une poche de retenue peut être poussée par-dessus une arête de pliage extérieure (FK2) d'un premier soufflet (FB2) et dont au moins une poche de retenue supplémentaire peut être poussée par-dessus une arête de pliage extérieure (FK1) d'un deuxième soufflet (FB1), en recouvrant les arêtes de pliage respectives (FK2, FK1).

2. Elément de couplage selon la revendication 1, **caractérisé en ce que** les poches de retenue (HT) sont conçues sous une forme rectangulaire allongée et **en ce que** dans leur extension longitudinale, elles peuvent être poussées par dessus les arêtes de pliage (FK1, FK2).

3. Elément de couplage selon la revendication 1 ou 2, **caractérisé en ce que** les soufflets (FB1, FB2) ont une section transversale rectangulaire et **en ce que** respectivement deux arêtes de pliage extérieures opposées dans la section transversale (FK1, FK2) d'une lamelle (L') sont chevauchées par deux poches de retenue parallèles (L').

4. Elément de couplage selon l'une quelconque des revendications 1 à 3, **caractérisé en ce que** deux paires de poches de retenue (HT) respectivement orientées mutuellement en parallèle, déportées de 90° sont conçues sur un corps (K).

5. Elément de couplage selon l'une quelconque des revendications 1 à 4, **caractérisé en ce que** les poches de retenue (HT) sont formées par fronçage à partir d'un corps (K) de l'élément de couplage.

6. Elément de couplage selon l'une quelconque des revendications 1 à 5, **caractérisé en ce qu'**il peut être bloqué sur au moins l'un des soufflets (FB1, FB2), si l'une des arêtes de pliage externes de ce dernier (FK1, FK2) est recouvert par une poche de retenue (HT) correspondante de l'élément de couplage (E).

7. Elément de couplage selon l'une quelconque des revendications 1 à 6, **caractérisé en ce qu'**il peut être relié à un soufflet (FB1, FB2) par au moins une liaison auto-agrippante (KB).

8. Elément de couplage selon l'une quelconque des revendications 2 à 7, **caractérisé en ce qu'**on a prévu au moins une liaison auto-agrippante (KB) entre l'élément de couplage (E) et chacun des soufflets (FB1, FB2).

9. Elément de couplage selon l'une quelconque des revendications 7 ou 8, **caractérisé en ce que** la liaison auto-agrippante est respectivement composée d'une bande auto-grippante (KB1, KB2) sur chacun des deux éléments devant être reliés ensemble.

10. Elément de couplage selon la revendication 9, **caractérisé en ce que** sur le corps (K), entre deux poches de retenue parallèles voisines (HT) est conçue une poche de retenue (HL) s'étendant entre lesdites poches de retenue (HT) et s'étendant à angle droit par rapport à ces dernières, sur laquelle est fixée une première bande auto-agrippante (KB1).

11. Elément de couplage selon la revendication 9 et 10, **caractérisé en ce qu'**une deuxième bande auto-agrippante adaptée (KB2) à la première (KB1) pour former une liaison auto-agrippante (KB) est fixée sur une lamelle (L) du soufflet respectif (FB1, FB2) qui s'étend avec un coude à 90° entre les arêtes de pliage extérieures (FK1, FK2) du soufflet (FB1, FB2) qui sont chevauchées par les poches de retenue correspondantes (HT).

12. Elément de couplage selon l'une quelconque des revendications 1 à 11, **caractérisé en ce que** son corps (K) est conçu sous la forme d'une tôle plane, à partir de laquelle les poches de retenue (HT) sont chacune pliées à 180°, la distance entre le corps (K) et les poches de retenue individuelles (HT) étant supérieure ou égale à l'épaisseur d'une (double) lamelle (L') formant une arête de pliage extérieure (FK1, FK2) du soufflet (FB1, FB2).
